(19) Europäisches Patentamt / European Patent Office / Office européen des brevets

(11) **EP 4 683 112 A1**

(12) **EUROPEAN PATENT APPLICATION**
published in accordance with Art. 153(4) EPC

(43) Date of publication:
**21.01.2026  Bulletin 2026/04**

(21) Application number: **24892461.5**

(22) Date of filing: **28.05.2024**

(51) International Patent Classification (IPC):
H01Q 1/38 (2006.01)        H01Q 9/04 (2006.01)
H01Q 21/08 (2006.01)       H04B 7/145 (2006.01)
H01Q 21/24 (2006.01)       H01Q 1/00 (2006.01)
H01Q 1/22 (2006.01)

(52) Cooperative Patent Classification (CPC):
H01Q 9/0407; H01Q 1/007; H01Q 1/2208;
H01Q 1/38; H01Q 21/08; H01Q 21/24; H04B 7/155

(86) International application number:
**PCT/KR2024/007233**

(87) International publication number:
**WO 2025/249595 (04.12.2025 Gazette 2025/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **LG ELECTRONICS, INC.**
**Seoul 07336 (KR)**

(72) Inventors:
• **PARK, Byeongyong**
**Seoul 06772 (KR)**

• **CHO, Ilnam**
**Seoul 06772 (KR)**
• **LEE, Dongik**
**Seoul 06772 (KR)**
• **KIM, Uisheon**
**Seoul 06772 (KR)**

(74) Representative: **Schott, Jakob Valentin**
**Wuesthoff & Wuesthoff**
**Patentanwälte und Rechtsanwalt PartG mbB**
**Schweigerstraße 2**
**81541 München (DE)**

(54)    **RELAY DEVICE FOR TRANSMITTING WIRELESS SIGNAL**

(57)    A repeater device may include a first substrate on one surface of which a first metal pattern configured to receive a signal is disposed; a second substrate on one surface of which a second metal pattern is disposed to correspond to the first metal pattern; and a flexible substrate having one end portion connected to the first substrate, the other end portion connected to the second substrate, and a transmission line on one surface thereof. The first substrate, the second substrate, and the flexible substrate may be disposed as an integrated module configured integrally to surround a first surface, a second surface, and a side surface between the first surface and the second surface of a structure to which the repeater device is attached.

*FIG. 5*

EP 4 683 112 A1

## Description

## Technical field

The present disclosure relates to a repeater device of transmitting a wireless signal. More specifically, the present disclosure relates to a repeater device of transmitting a wireless signal, which can be disposed on a door, a fire door, or the like.

## Background Art

With the rapid development of 4th/5th generation mobile communications, communication module design technology to support ultra high-speed, large-capacity communications is rapidly evolving. In 5G communications, coverage expansion methods that can expand communication regions are being studied because the range of radio waves is short.

Reconfigurable intelligent surface (RIS) may expand communication regions at a lower cost than installing repeaters. Accordingly, RIS is being actively developed primarily by domestic and foreign telecommunication companies, but there is a problem in that phase-variable elements available in high frequency bands are limited, thereby making their development and use difficult.

Meanwhile, in an indoor environment, signal transmission characteristics may be deteriorated due to a polarization mismatch. In this regard, in an indoor environment, there is a problem in that a polarization direction of radio waves may change depending on the scattering of radio waves caused by an internal structure of a room. Therefore, a repeater device disposed in an indoor region needs to have a radiator structure configured to support a dual polarization.

Meanwhile, in an indoor environment, there is a problem in that signal loss characteristics increase due to an internal structure of a room compared to a free space. In addition, there is a problem in that signal loss characteristics may further increase as repeater devices are disposed on one side and the other side of a structure such as an elevator door or a fire door, which is made of a metallic material.

## Disclosure of Invention

## Technical Problem

The present disclosure aims to prevent signal transmission characteristic from being deteriorated due to a polarization mismatch in an indoor environment.

An aspect of the present disclosure is to increase a probability of receiving a signal in a shadow area.

The present disclosure aims to improve the reflection performance of a reflective metasurface so as to enhance wireless communication coverage using the reflective metasurface.

An aspect of the present disclosure is to provide a repeater device capable of responding to various radio environments through adjusting the gain of the repeater device.

## Solution to Problem

A repeater device according to the present disclosure may include a first substrate on one surface of which a first metal pattern configured to receive a signal is disposed; a second substrate on one surface of which a second metal pattern is disposed to correspond to the first metal pattern; and a flexible substrate having one end portion connected to the first substrate, the other end portion connected to the second substrate, and a transmission line on one surface thereof. The first substrate, the second substrate, and the flexible substrate may be disposed as an integrated module configured integrally to surround a first surface, a second surface, and a side surface between the first surface and the second surface of a structure to which the repeater device is attached.

According to an embodiment, the first metal pattern may be configured with first radiators disposed to be spaced apart by a first distance on the other axis perpendicular to one axis of the first surface. The second metal pattern may be configured with second radiators disposed to be spaced apart by a second distance equal to the first distance on the other axis perpendicular to one axis of the second surface. The transmission line may include a plurality of transmission lines configured to connect the respective first radiators and the respective second radiators. The respective first radiators, the respective second radiators, and the respective transmission lines may constitute respective sub modules. The respective sub modules may be expanded and disposed in plurality to be spaced apart by the first distance on the other axis of the structure.

According to an embodiment, the first distance between the first radiators and the second distance between the second radiators, which are adjacent on the other axis, may be values between 0.5 and 1 wavelength on the basis of a wavelength corresponding to a maximum frequency within an operating frequency band. A first beam pattern formed through the first radiators may be formed to have a narrower beam width in the other axis direction than in one axis direction. A second beam pattern formed through the second radiators may be formed to have a narrower beam width in the other axis direction than in the one axis direction.

According to an embodiment, the structure may constitute a door made of a metallic material. The first radiators may be disposed on a front surface of the door, and the second radiators may be disposed on a rear surface of the door. Positions on the first surface where the first radiators may correspond to those on the second surface where the second radiators are disposed.

According to an embodiment, the transmission line of the flexible substrate may be disposed to extend to an inner region of the first substrate where the first metal pattern is disposed. The transmission line of the flexible substrate may be disposed to extend to an inner region of the second substrate where the second metal pattern is disposed.

According to an embodiment, the signal received in a first region through the first metal pattern may be transmitted to a second region different from the first region through the transmission line and the second metal pattern. A second signal received in the second region through the second metal pattern may be transmitted to the first region through the transmission line and the first metal pattern. The first region may be a region in a front direction where the first metal pattern is disposed, and the second region may be a region in a front direction where the second metal pattern is disposed.

According to an embodiment, the transmission line may be implemented as a horizontal connecting portion that horizontally connects the first metal pattern and the second metal pattern. The flexible substrate may include first and second ground patterns disposed on front and rear surfaces thereof; and the horizontal connecting portion disposed in parallel to the first and second ground patterns between the first and second ground patterns.

According to an embodiment, the horizontal connecting portion may include a first feed pattern configured to transmit a first polarized signal in one axis direction; and a second feed pattern spaced apart from and disposed in parallel to the first feed pattern so as to transmit a second polarized signal in the other axis direction perpendicular to the one axis direction.

According to an embodiment, the first substrate may include a first vertical connection via vertically connecting a first point of the first metal pattern and the first feed pattern, and a second vertical connection via vertically connecting a second point of the first metal pattern and the second feed pattern. The second substrate may include a third vertical connection via vertically connecting a third point of the second metal pattern and the first feed pattern, and a fourth vertical connection via vertically connecting a fourth point of the second metal pattern and the second feed pattern.

According to an embodiment, the first substrate may include a first ground layer disposed on a rear surface of the first substrate; a first signal pattern layer disposed in an upper region in a Z-axis direction of the first ground layer; a second ground layer disposed in an upper region in a Z-axis direction of the first signal pattern layer; and a first antenna layer on which the first metal pattern is disposed in an upper region in a Z-axis direction of the second ground layer. A first dielectric layer may be disposed between the first ground layer and the first signal pattern layer, a second dielectric layer may be disposed between the first signal pattern layer and the second ground layer, and a third dielectric layer may be disposed between the second ground layer and the first antenna layer.

According to an embodiment, the second substrate may include a third ground layer disposed on a rear surface of the second substrate; a second signal pattern layer disposed in an upper region in a Z-axis direction of the third ground layer; a fourth ground layer disposed in an upper region in a Z-axis direction of the second signal pattern layer; and a second antenna layer on which the second metal pattern disposed is disposed in an upper region in a Z-axis direction of the fourth ground layer. A fourth dielectric layer may be disposed between the third ground layer and the second signal pattern layer, a fifth dielectric layer may be disposed between the second signal pattern layer and the fourth ground layer, and a sixth dielectric layer may be disposed between the fourth ground layer and the second antenna layer.

According to an embodiment, the first substrate may further include a first ground via vertically connecting the first ground layer and the second ground layer, and the first and second vertical connection vias connecting the first metal pattern and the first signal pattern layer. The second substrate may further include a second ground via vertically connecting the third ground layer and the fourth ground layer, and the third and fourth vertical connection vias connecting the second metal pattern and the second signal pattern layer. The first and second feed patterns of the flexible substrate may be disposed to extend to the first signal pattern layer of the first substrate. The first and second feed patterns of the flexible substrate may be disposed to extend to the second signal pattern layer of the second substrate.

According to an embodiment, the first metal pattern and the second metal pattern may be disposed in a direction rotated by a first angle with respect to an X-axis. The first metal pattern and the second metal pattern may be disposed with square patches having first to fourth sides. The first and second feed patterns may be disposed in parallel to a Y-axis.

According to an embodiment, the first substrate may further include first and second parasitic patches disposed in parallel to a first side of the first metal pattern and a second side opposite to the first side, and third and fourth parasitic patches disposed in parallel to a third side and a fourth side opposite to the third side. The second substrate may further include fifth and sixth parasitic patches disposed in parallel to a first side of the second metal pattern and a second side opposite to the first side, and seventh and eighth parasitic patches disposed in parallel to a third side and a fourth side opposite to the third side.

According to an embodiment, the first and third parasitic patches may be disposed to have a first length and a first width, and the second and fourth parasitic patches may be disposed to have a second length and a second width. The fifth and seventh parasitic patches may be disposed to have the first length and the first width, and the sixth and eighth parasitic patches may be disposed to have the second length and the second width.

According to an embodiment, the first and second ground patterns of the flexible substrate may include metal mesh lines disposed in a first axis and a second axis direction perpendicular to the first axis. A dielectric region from which a metal pattern is removed may be disposed between adjacent metal mesh lines among the metal mesh lines. A distance between the adjacent metal mesh lines may be disposed to have a predetermined range on the basis of 3.6 mm.

According to an embodiment, a third width of the first and second feed patterns of the flexible substrate may be disposed to have a characteristic impedance of less than 50 ohm within a predetermined range on the basis of 100 um. A fourth width of the first and second feed patterns disposed on the first and second signal pattern layers of the first and second substrates may be less than the third width and is disposed to have an impedance of 50 ohm.

According to an embodiment, the flexible substrate may further include a first vertical via configured to vertically connect the first and second ground patterns between a first horizontal connecting portion and a second horizontal connecting portion; a second vertical via configured to be spaced apart from an end portion of the first horizontal connecting portion to vertically connect the first and second ground patterns; and a third vertical via configured to be spaced apart from an end portion of the second horizontal connecting portion to vertically connect the first and second ground patterns. A first horizontal distance between the first vertical via and the second vertical via and a second horizontal distance between the first vertical via and the third vertical via may be set to be the same.

According to an embodiment, the transmission line may be implemented as a vertical connecting portion disposed vertically with respect to the first metal pattern and the second metal pattern. The first substrate and the second substrate may be connected through a flexible substrate. The flexible substrate may include first and second ground patterns disposed on front and rear surfaces thereof; and a vertical connecting portion disposed vertically with respect to the first and second ground patterns between the first and second ground patterns.

According to an embodiment, the vertical connecting portion may include a first vertical via configured to vertically connect center points of the first and second ground patterns; a second vertical via configured to vertically connect first points on one sides of the first and second ground patterns; and a third vertical via configured to vertically connect second points on the other sides of the first and second ground patterns. A first horizontal distance between the first vertical via and the second vertical via and a second horizontal distance between the first vertical via and the third vertical via may be set to be the same.

According to an embodiment, a first polarized signal in one axis direction may be transmitted through a first waveguide region between the first vertical via and the second vertical via. A second polarized signal in the other axis direction perpendicular to the one axis direction may be transmitted through a second waveguide region between the first vertical via and the third vertical via.

According to an embodiment, the first metal pattern may be configured with first radiators disposed to be spaced apart in the other axis direction perpendicular to the one axis direction. The second metal pattern may be configured with second radiators disposed to be spaced apart in the other axis direction. The transmission line may include a plurality of transmission lines configured to connect the respective first radiators and the respective second radiators.

According to an embodiment, the first beam pattern formed through the first radiators may be formed to have a narrower beam width in the other axis direction than in the one axis direction. The second beam pattern formed through the second radiators may be formed to have a narrower beam width in the other axis direction than in the one axis direction.

According to an embodiment, the first radiators may be disposed on a front surface of a door, and the second radiators may be disposed on a rear surface of the door. Regions where the first radiators are disposed may correspond to regions where the second radiators are disposed.

## Advantageous Effects of Invention

According to an embodiment of the present disclosure, an antenna supporting a dual polarization in a repeater device may be utilized, thereby preventing signal transmission characteristics from being deteriorated due to a polarization mismatch in an indoor environment.

According to an embodiment of the present disclosure, an array antenna having radiators in an array structure in a repeater device may be utilized, thereby increasing a probability of receiving a signal in a shadow area.

According to an embodiment of the present disclosure, a modular structure may allow easy adjustment of a number of elements, and respond to various radio environments through adjusting the gain of the repeater device according to the adjustment of the number of elements.

Further scope of applicability of the present disclosure will become apparent from the following detailed description. It should be understood, however, that the detailed description and specific examples, such as the preferred embodiments of the present disclosure, are given by way of illustration only, since various modifications and alternations within the concept and scope of the disclosure will be apparent to those skilled in the art.

## Brief Description of Drawings

FIG. 1 shows a basic structure of a repeater device according to the present disclosure.

FIG. 2 shows embodiments of a repeater device that transmits a wireless signal.

FIG. 3 shows a conceptual diagram in which a repeater device having an array structure receives a first signal from a base station and transmits a second signal to an electronic device.

FIG. 4 shows a conceptual diagram in which a repeater device that transmits a wireless signal, which is disposed outside and inside a door, transmits a signal from a base station to the inside of the door.

FIG. 5 shows a structure of a repeater device in which first and second metal patterns of first and second substrates are connected by a transmission line of a flexible substrate.

FIG. 6 shows a cross-sectional view of a flexible substrate on which the transmission line of FIG. 5 is disposed.

FIG. 7 shows an implementation example of the repeater device of FIG. 5.

FIG. 8 shows a cross-sectional view of the repeater device of FIG. 7.

FIG. 9 shows the reflection coefficient characteristics and transmission coefficient characteristics of first and second metal patterns constituting a repeater device that transmits a wireless signal according to the present disclosure.

FIG. 10 shows first and second ground patterns in upper and lower regions of a transmission line disposed in a strip line structure on a flexible substrate.

FIG. 11 shows a structure of a transmission line disposed on a first substrate, a flexible substrate, and a second substrate.

FIG. 12 shows a cross-sectional view of a flexible substrate of a repeater device configured with a feed structure having a waveguide structure.

FIG. 13A shows a repeater device in which transmission lines are disposed to have the same length.

FIG. 13B shows a repeater device in which transmission lines are disposed to have different lengths.

FIG. 14 shows structures in which a repeater device can be disposed on an inner side of an elevator door or a fire door.

FIGS. 15A and 15B show radiator structures of a repeater device disposed on one side of the inside and the outside of a door.

FIG. 16A shows beam patterns by the radiator of the repeater device of FIG. 15A.

FIG. 16B shows beam patterns by the radiators of the repeater device of FIGS. 13B and 15B.

FIGS. 17 and 18 shows a repeater device including first and second metal patterns on first and second substrates connected by a coaxial cable.

## Mode for the Invention

A description will now be given in detail of specific embodiments of the present disclosure, together with drawings.

Hereinafter, a description will be given in more detail of embodiments related to the present disclosure, with reference to the accompanying drawings. In general, a suffix such as "module" and "unit" may be used to refer to elements or components. Use of such a suffix herein is merely intended to facilitate description of the specification, and the suffix itself is not intended to give any special meaning or function.

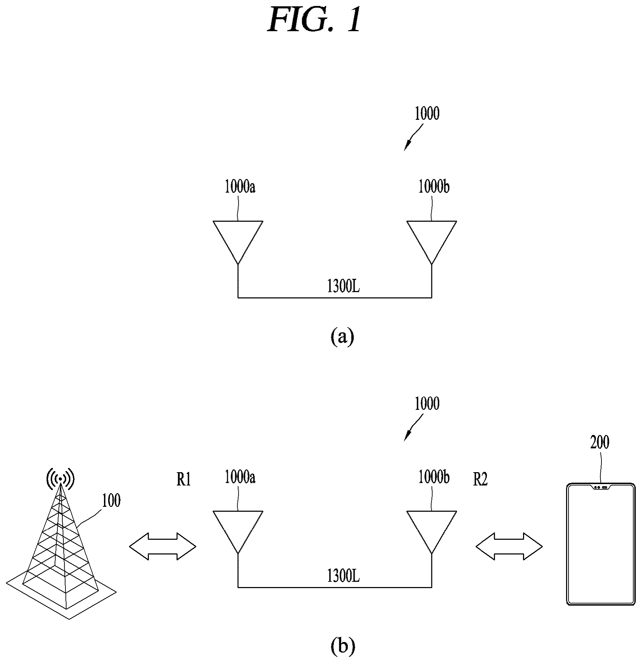

Hereinafter, a repeater device that transmits a wireless signal in connection with the present disclosure will be described. A repeater device that transmits a wireless signal according to the present disclosure is configured with a wireless signal repeater device that transmits a wireless signal. In this regard, FIG. 1 shows a basic structure of a repeater device according to the present disclosure.

Referring to (a) of FIG. 1, a repeater device 1000 may be configured to include a first antenna 1000a, a second antenna 1000b, and a transmission line 1300L. The repeater device 1000 may transmit a wireless signal received through the first antenna 1000a to the second antenna 1000b through the transmission line 1300L.

Referring to (b) of FIG. 1, the repeater device 1000 may receive a first signal received from a base station 100 through the first antenna 1000a disposed in a first region R1. The repeater device 1000 may transmit a first signal received through the first antenna 1000a to the second antenna 1000b disposed in a second region R2 through the transmission line 1300L. The repeater device 1000 may be referred to as a passive repeater device because it transmits a wireless signal from the first region R1 to the second region R2 without amplifying the wireless signal.

The repeater device 1000 may transmit a second signal transmitted through the transmission line 1300L to the second region R2 via the second antenna 1000b. Accordingly, an electronic device 200 disposed in the second region R2 may receive the second signal to perform wireless communication with the base station 100. Even when the electronic device 200 cannot directly receive the first signal from the base station 100 or is in a region where a reception strength of the first signal is lower than a threshold, it may receive the second signal to perform wireless communication with the base station 100.

To this end, the repeater device 1000 may be configured to have the first and second antennas 1000a, 1000b disposed on both sides of the transmission line 1300L. The transmission line 1300L may be configured with a film structure. Depending on the application, both the first and second antennas 1000a, 1000b may be configured with an integrated film structure. Depending on the application, the transmission line 1300L may be configured with a film structure and the first and second antennas 1000a, 1000b may be configured with a substrate structure. The repeater device 1000 may be attached to a gap in a door such as a fire door or an elevator to transmit an external signal into a shielded space to eliminate a wireless signal shadow area (space of 1 to 2 m).

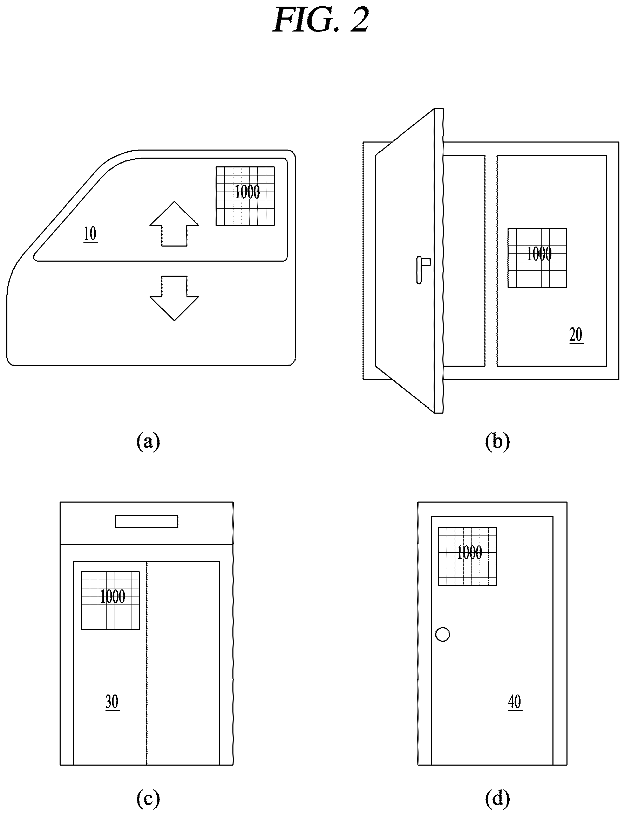

Meanwhile, a repeater device that transmits a wireless signal according to the present disclosure may be disposed in a vehicle, a window, an elevator, a fire door, and a shadow area in a building. In this regard, FIG. 2 shows embodiments of a repeater device that transmits a wireless signal. (a) of FIG. 2 shows a structure in which the repeater device 1000 is disposed on a passenger seat window 10 in a vehicle. (b) of FIG. 2 shows a structure in which the repeater device 1000 is disposed on a window 20 in a building. (c) of FIG. 2 shows a structure in which the repeater device 1000 is disposed on an elevator door 30 in a building. (d) of FIG. 2 shows a structure in which the repeater device 1000 is disposed on a fire door 40.

A repeater device that transmits a wireless signal according to the present disclosure is not limited to a placement structure of FIG. 2. In this regard, the repeater device 1000 may be attached through the space between the window 10, the window 20, the door 30 and the fire door 40. In addition, the repeater device 1000 may be disposed regardless of a medium of an attachment surface, such as glass, stainless steel (SUS), cement, or the like.

Meanwhile, since a 5G wireless signal has a narrow cell coverage, a 5G repeater may be installed in an outdoor base station or repeater placement structure. On the contrary, since a 4G wireless signal has a wide cell coverage, a 4G repeater may be installed in an indoor repeater placement structure. LTE mainly utilizes the indoor repeater placement structure. Meanwhile, when a 5G non-stand-alone (NSA) mode is adopted, a large number of indoor repeaters are expected to be in demand in the future when switching to SA.

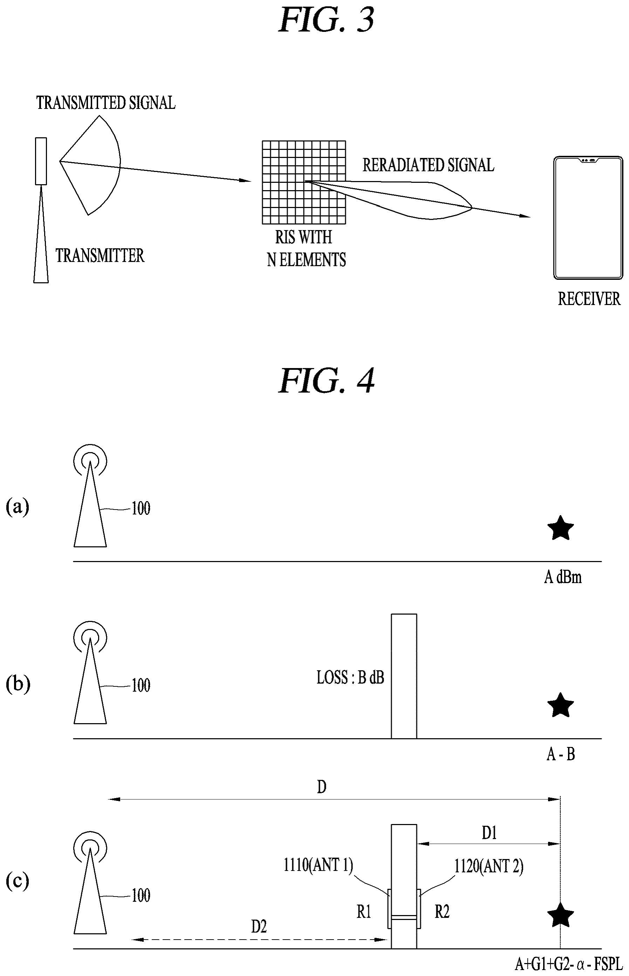

Meanwhile, a repeater device that transmits a wireless signal according to the present disclosure may transmit a wireless signal in a desired direction using the electromagnetic properties of a metamaterial. In this regard, FIG. 3 shows a conceptual diagram in which a repeater device having an array structure receives a first signal from a base station and transmits a second signal to an electronic device.

Referring to FIG. 3, the repeater device 1000 that transmits a wireless signal may receive a first signal from the base station 100. A first beam coverage of the first signal transmitted from the base station 100 may be formed with a first angle. The repeater device 1000 may receive a first signal from the base station 100. An antenna of the repeater device 1000 may be configured with a two-dimensional array structure. The antenna of the repeater device 1000 may be configured with a two-dimensional array structure having N antenna elements. A second beam coverage of a second signal transmitted from the repeater device 1000 may be formed with a second angle. The second beam coverage is formed with a second angle narrower than the first beam coverage, so a more directional beam may be transmitted to the electronic device 200.

The repeater device 1000 of FIG. 3 may be configured with a reconfigurable intelligent surface (RIS) including a plurality of antenna elements. A wireless signal having a specific frequency band may be configured to be reflected or transmitted by a repeater 1000 having a reflective RIS or transparent RIS structure. A beam forming angle of the second signal may be varied by independently varying the on/off states of respective elements constituting the repeater device 1000 of the reflective RIS or transparent RIS structure. The repeater device 1000 may be applied in an embedded form within a product, but is not limited thereto.

Meanwhile, a repeater device that transmits a wireless signal according to the present disclosure may be disposed outside and inside a door to receive a first signal from a base station and transmit the received first signal as a second signal to an inside of the door. In this regard, FIG. 4 shows a conceptual diagram in which a repeater device that transmits a wireless signal, which is disposed outside and inside a door, transmits a signal from a base station to the inside of the door.

Referring to (a) of FIG. 4, a power level of a signal received at a first point spaced by a predetermined distance from the base station 100 may be A dBm. Referring to (b) of FIG. 4, an obstacle such as the door 30 or the fire door 40 of FIG. 2 may be disposed at a second point between the base station 100 and the first point. An obstacle such as the door 30 or the fire door 40 may have a loss value of B dB.

Referring to FIG. 2 and (c) of FIG. 4, the repeater device 1000 having first and second metal patterns 1110, 1120 on one surface and the other surface of the door 30 or the fire door 40 may be disposed. Since the first and second metal patterns 1110, 1120 of the repeater device 1000 that transmits a wireless signal between the first region R1 and the second region R2 are disposed at positions corresponding to each other, the repeater device 1000 may be referred to as a repeater device having a back-to-back structure.

The first point may be spaced apart from the second point where the repeater device 1000 is disposed by a first distance D1. The second point where the repeater device 1000 is disposed may be spaced apart from the base station 100 by a second distance D2. A distance D from the base station 100 to the first point may be determined as a sum of the first distance D1 and the second distance D2.

A first antenna ANT1 by the first metal pattern 1110 may be configured to have a first gain value G1. A second antenna ANT2 by the second metal pattern 1120 may be configured to have a second gain value G2. A transmission line 1300L connecting the first and second metal patterns 1110, 1120 may be configured to have a predetermined feed loss (α). As the repeater device 1000 is disposed to compensate for a loss due to an obstacle, a power level of a signal received at the first point must satisfy a condition of Equation 1. Here, N is a number of elements of the first antenna ANT1 and the second antenna ANT2. FSPL is a free space path loss from the base station 100 to the first point.

## [Equation 1]

$$A+G1+G2-\alpha-FSPL+20\log(N)>A-B$$

Therefore, an array antenna gain G1+G2+20log(N) of the first and second antennas ANT1, ANT2 of the repeater device 1000 needs to be configured to compensate for a loss value B dB due to an obstacle. Hereinafter, the repeater device 1000 having an array antenna gain of the first and second antennas ANT1, ANT2 to compensate for B dB, which is a loss value due to an obstacle, will be described.

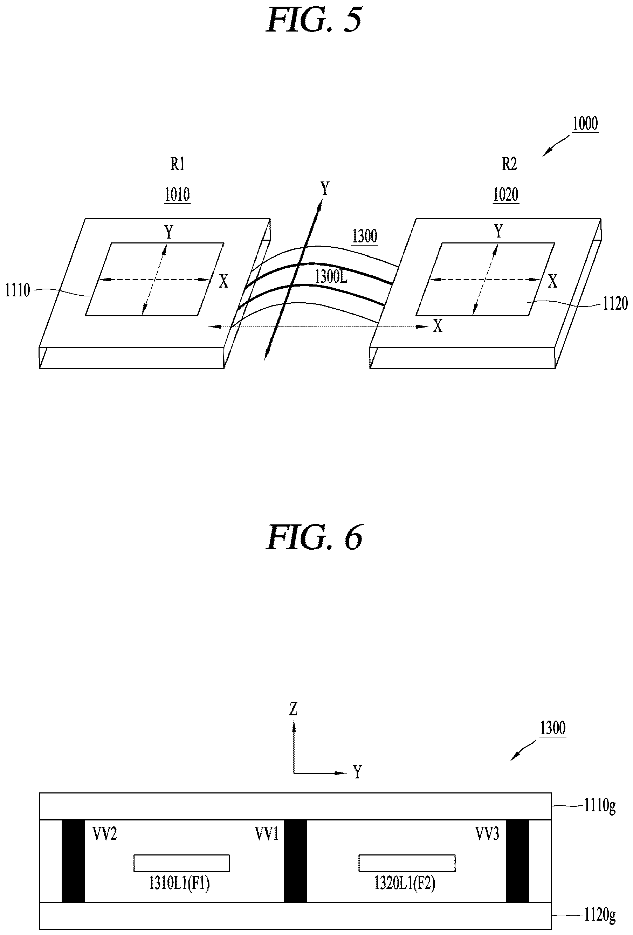

Meanwhile, the structure of a repeater device that transmits a wireless signal according to the present disclosure will be described in detail with reference to the drawings. In this regard, FIG. 5 shows a structure of a repeater device in which first and second metal patterns of first and second substrates are connected by a transmission line of a flexible substrate. FIG. 6 shows a cross-sectional view of a flexible substrate on which the transmission line of FIG. 5 is disposed. FIG. 6 shows a cross-sectional view in a Y-axis direction of a flexible substrate 1300 on which the transmission line of FIG. 5 is disposed.

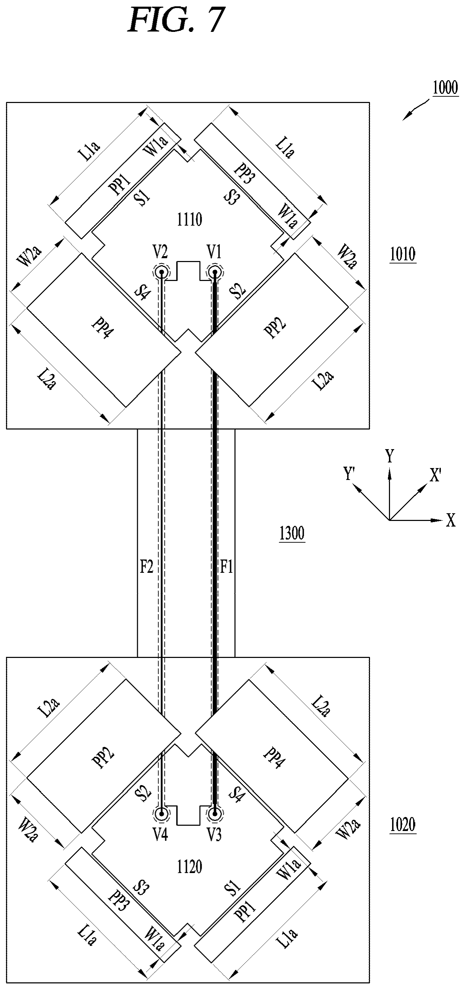

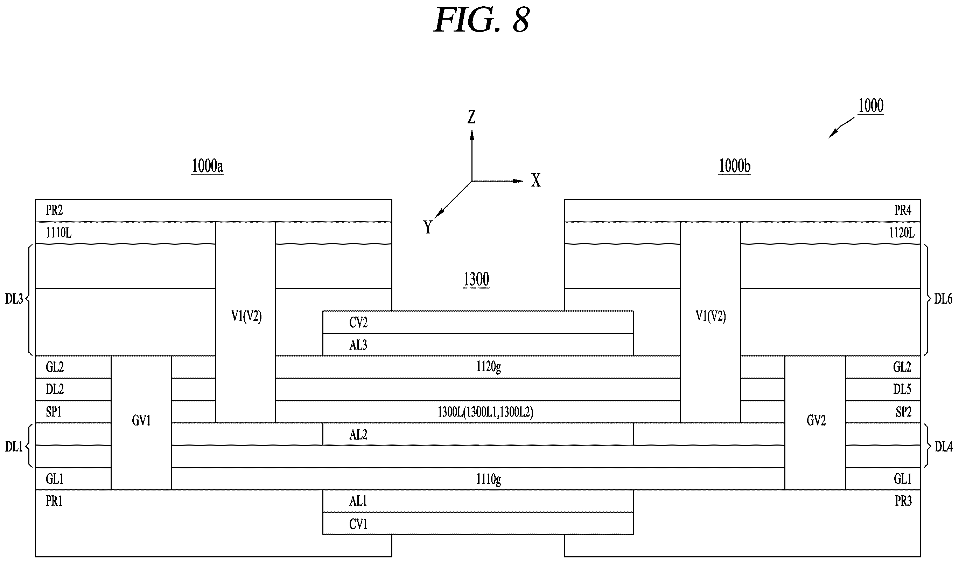

FIG. 7 shows an implementation example of the repeater device of FIG. 5. Referring to FIG. 7, the first and second metal patterns 1110, 1120 may be disposed in a form rotated at a predetermined angle, for example, 45 degrees, with respect to an X-axis. FIG. 8 shows a cross-sectional view of the repeater device of FIG. 7.

Referring to FIGS. 1 to 8, the repeater device 1000 according to the present disclosure will be described. The repeater device 1000 may be configured to include a flexible substrate 1300 having a first substrate 1010, a second substrate 1020, and a transmission line 1300L.

The first substrate 1010 may be disposed with the first metal pattern 1110 configured to receive a signal having a specific frequency band on one surface thereof. The first metal pattern 1110 may be implemented as a first radiator (first antenna) to radiate a signal having a specific frequency band. The second substrate 1020 may be disposed with the second metal pattern 1120 to correspond to the first metal pattern 1110 on one surface thereof. The second metal pattern 1120 may be configured to radiate a signal received from the first metal pattern 1110. A shape of the first metal pattern 1110 and a shape of the second metal pattern 1120 may be the same. The X, Y coordinates at which the first metal pattern 1110 is disposed may be the same as those of the second metal pattern 1120.

The second metal pattern 1120 may be implemented as a second radiator (second antenna) to radiate a signal having a specific frequency band. The second metal pattern 1120 may be implemented as a second radiator (second antenna) to receive a second signal having a specific frequency band. The first metal pattern 1110 may be configured to radiate a second signal received through the second metal pattern 1120. The first metal pattern 1110 and the second metal pattern 1120 may be disposed on a front surface of the first substrate 1010 and a front surface of the second substrate 1020, but are not limited thereto.

The flexible substrate 1300 may be configured such that one end portion thereof is connected to the first substrate 1010 and the other end portion thereof is connected to the second substrate 1020. The flexible substrate 1300 may have the transmission line 1300L on one surface thereof. The flexible substrate 1300 may have the transmission line 1300L coupled to the first metal pattern 1110 and the second metal pattern 1120. One end portion of the transmission line 1300L may be coupled to the first metal pattern 1110, and the other end portion thereof may be coupled to the second metal pattern 1120.

The transmission line 1300L may have a connecting portion connecting the first metal pattern 1110 and the second metal pattern 1120. A signal received into the first region R1 through the first metal pattern 1110 may be transmitted to the second region R2, which is different from the first region R1, through the transmission line 1300L and the second metal pattern 1120. A second signal received into the second region R2 through the second metal pattern 1120 may be transmitted to the first region R1 through the transmission line 1300L and the first metal pattern 1110.

The first region R1 may be a region in a front direction where the first metal pattern 1110 is disposed. The second region R2 may be a region in a front direction where the second metal pattern 1120 is disposed. The first region R1 may be a front direction of the door 30 or the fire door 40 of FIG. 4. The second region R2 may be a region in a rear surface of the door 30 or the fire door 40 of FIG. 4.

The door 30 or the fire door 40 corresponds to a structure 30, 40 to which the repeater device 1000 is attached. The first substrate 1010 may be disposed on a first surface of the structure 30, 40 to which the repeater device 1000 is attached. The second substrate 1020 may be disposed on a second surface of the structure 30, 40 to which the repeater device 1000 is attached. The flexible substrate 1300 may be disposed on a side surface between the first surface and the second surface of the structure 30, 40 to which the repeater device 1000 is attached. The first substrate 1010, the second substrate 1020, and the flexible substrate 1300 may be disposed as an integrated module configured integrally to surround a first surface, a second surface, and a side surface of the structure 30, 40.

The transmission line 1300L may be implemented as a horizontal connecting portion 1300L1 that horizontally connects the first metal pattern 1110 and the second metal pattern 1120. The first substrate 1010 and the second substrate 1020 may be connected through the flexible substrate 1300. The flexible substrate 1300 may include first and second ground patterns 1110g, 1120g and a horizontal connecting portion 1300L1. The first and second ground patterns 1110g, 1120g may be disposed on the front and rear surfaces of the flexible substrate 1300. The horizontal connecting portion 1300L1 may be disposed in parallel to the first and second ground patterns 1110g, 1120g between the first and second ground patterns 1110g, 1120g.

The flexible substrate 1300 may be configured to include a plurality of vertical vias. Referring to FIGS. 5 and 6, the plurality of vertical vias of the flexible substrate 1300 may be disposed as a plurality of vertical ground vias vertically connecting the first and second ground patterns 1110g, 1120g. The flexible substrate 1300 may be configured to include a first vertical via VV1, a second vertical via VV2, and a third vertical via VV3. A first horizontal connecting portion 1310L1 and a second horizontal connecting portion 1320L1 may be disposed in a strip line structure inside the flexible substrate 1300. The first horizontal connecting portion 1310L1 and the second horizontal connecting portion 1320L1 may correspond to a first feed pattern F1 and a second feed pattern F2, respectively.

The first vertical via VV1 may be configured to vertically connect the first and second ground patterns 1110g, 1120g between the first horizontal connecting portion 1310L1 and the second horizontal connecting portion 1320L1. The second vertical via VV2 may be configured to be spaced apart from an end portion of the first horizontal connecting portion 1310L1 to vertically connect the first and second ground patterns 1110g, 1120g. The third vertical via VV3 may be configured to be spaced apart from an end portion of the second horizontal connecting portion 1320L2 to vertically connect the first and second ground patterns 1110g, 1120g.

A first horizontal distance between the first vertical via VV1 and the second vertical via VV2 and a second horizontal distance between the first vertical via VV1 and the third vertical via VV3 may be set to be the same. A first distance between one side end portion of the first horizontal connecting portion 1310L1 and the first vertical via VV1 and a second distance between the other side end portion of the first horizontal connecting portion 1310L1 and the second vertical via VV2 may be set to be the same. A third distance between one side end portion of the second horizontal connecting portion 1320L1 and the third vertical via VV3 and a fourth distance between the other side end portion of the second horizontal connecting portion 1320L1 and the first vertical via VV1 may be set to be the same.

Therefore, the first feed pattern F1 and the second feed pattern F2 corresponding to the first horizontal connecting portion 1310L1 and the second horizontal connecting portion 1320L1, which are disposed in the flexible substrate 1300 are disposed in a symmetrical structure. Accordingly, the first and second signal characteristics (reflection loss, insertion loss) on the first feed pattern F1 and the second feed pattern F2 may be maintained at the same level or at a similar level within a predetermined range.

The horizontal connecting portion 1300L1 may be configured to include the first feed pattern F1 and the second feed pattern F2. The first feed pattern F1 may be configured to transmit a first polarized signal in one axis direction. The second feed pattern F2 may be spaced apart from and disposed in parallel to the first feed pattern F1 to transmit a second polarized signal in the other axis direction perpendicular to the one axis direction. Referring to FIG. 5, a first polarized signal may be formed in an X-axis direction and a second polarized signal may be formed in a Y-axis direction. Referring to FIG. 7, a first polarized signal may be formed in an X'-axis direction and a second polarized signal may be formed in a Y'-axis direction. The X'-axis direction may be formed at an angle rotated by a predetermined angle, for example, 45 degrees, with respect to the X-axis direction. The Y'-axis direction may be formed at an angle rotated by a predetermined angle, for example, 45 degrees, with respect to the Y-axis direction.

The first substrate 1010 may include a first vertical connection via V1 and a second vertical connection via V2. The first vertical connection via V1 may vertically connect a first point of the first metal pattern 1110 and the first feed pattern F1. The second vertical connection via V2 may vertically connect a second point of the first metal pattern 1110 and the second feed pattern F2.

The second substrate 1020 may include a third vertical connection via V3 and a fourth vertical connection via V4. The third vertical connection via V3 may vertically connect a third point of the second metal pattern 1120 and the first feed pattern F1. The fourth vertical connection via V4 may vertically connect a fourth point of the second metal pattern 1120 and the second feed pattern F2.

The first substrate 1010 and the second substrate 1020 may be configured with a multi-layer substrate structure. The first substrate 1010 may be configured to include a first ground layer GL1, a first signal pattern layer SP1, a second ground layer GL2, and a first antenna layer 1110L. The second substrate 1020 may be configured to include a third ground layer GL3, a second signal pattern layer SP2, a fourth ground layer GL4, and a second antenna layer 1120L.

The first ground layer GL1 may be disposed on a rear surface of the first substrate 1010. A first protective layer PR1, such as a photo solder resist (PSR) layer, may be disposed in a lower region in a Z-axis direction of the first ground layer GL1. The first signal pattern layer SP1 may be disposed in an upper region in the Z-axis direction of the first ground layer GL1. The second ground layer GL2 may be disposed in an upper region in the Z-axis direction of the first signal pattern layer SP1. The first antenna layer 1110L may be disposed in an upper region in the Z-axis direction of the second ground layer GL2. The first metal pattern 1110 may be disposed on the first antenna layer 1110L. A second protective layer PR2, such as a PSR layer, may be disposed in an upper region in the Z-axis direction of the first antenna layer 1110L.

A first dielectric layer DL1 may be disposed between the first ground layer GL1 and the first signal pattern layer SP1. A second dielectric layer DL2 may be disposed between the first signal pattern layer SP1 and the second ground layer GL2. A third dielectric layer DL3 may be disposed between the second ground layer GL2 and the first antenna layer 1110L.

A third ground layer GL3 may be disposed on a rear surface of the second substrate 1020. A third protective layer PR3, such as a PSR layer, may be disposed in a lower region in a Z-axis direction of the third ground layer GL3. The second signal pattern layer SP2 may be disposed in an upper region in the Z-axis direction of the third ground layer GL3. The fourth ground layer GL4 may be disposed in an upper region in the Z-axis direction of the second signal pattern layer SP2. The second antenna layer 1120L may be disposed in an upper region in the Z-axis direction of the fourth ground layer GL4. The second metal pattern 1120 may be disposed on the second antenna layer 1120L. A fourth protective layer PR4, such as a PSR layer, may be disposed in an upper region in a Z-axis direction of the second antenna layer 1120L.

A fourth dielectric layer DL4 may be disposed between the third ground layer GL3 and the second signal pattern layer SP2. A fifth dielectric layer DL5 may be disposed between the second signal pattern layer SP2 and the fourth ground layer GL4. A sixth dielectric layer DL6 may be disposed between the fourth ground layer GL4 and the second antenna layer 1120L.

The first substrate 1010 may be configured to include a first ground via GV1 and first and second vertical connection vias V1, V2. The first ground via GV1 may be configured to vertically connect the first ground layer GL1 and the second ground layer GL2. The first and second vertical connection vias V1, V2 may be configured to connect the first metal pattern 1110 and the first and second feed patterns F1, F2 of the first signal pattern layer SP1.

The second substrate 1020 may be configured to include the second ground via GV2 and the third and fourth vertical connection vias V3, V4. The second ground via GV2 may be configured to vertically connect the third ground layer GL3 and the fourth ground layer GL4. The third and fourth vertical connection vias V3, V4 may be configured to connect the second metal pattern 1120 and the first and second feed patterns F1, F2 of the second signal pattern layer SP2.

The flexible substrate 1300 may be configured with a multi-layer substrate structure. The flexible substrate 1300 may be stacked in the order of a first cover layer CV1, a first attachment layer AL1, a first ground pattern 1110g, a second attachment layer AL2, a horizontal connecting portion 1310L1, a second ground pattern 1120g, a third attachment layer AL3, and a second cover layer CV2.

The first and second feed patterns F1, F2 of the flexible substrate 1300 may be disposed to extend to the first signal pattern layer SP1 of the first substrate 1010. The first and second feed patterns F1, F2 of the flexible substrate 1300 may be disposed to extend to the second signal pattern layer SP2 of the second substrate 1010.

The first metal pattern 1110 and the second metal pattern 1120 may be disposed in a direction rotated by a first angle with respect to an X-axis. The first metal pattern 1110 and the second metal pattern 1120 may be disposed in a direction rotated within a predetermined angle range from 45 degrees with respect to the X-axis. The first metal pattern 1110 and the second metal pattern 1120 may be disposed with square patches having first to fourth sides S1, S2, S3, S4. The first and second feed patterns F1, F2 may be disposed in parallel to a Y-axis.

The first substrate 1010 may be configured to include first and second parasitic patches PP1, PP2 and third and fourth parasitic patches PP3, PP4. The first to fourth parasitic patches PP1, PP2, PP3, PP4 may be disposed on the first antenna layer 1110L on which the first metal pattern 1110 is disposed. The second substrate 1020 may be configured to include fifth and sixth parasitic patches PP5, PP6 and seventh and eighth parasitic patches PP7, PP8. The fifth to eighth parasitic patches PP5, PP6, PP7, PP8 may be disposed on the second antenna layer 1120L on which the second metal pattern 1120 is disposed.

The first and second parasitic patches PP1, PP2 may be spaced apart from and disposed in parallel to a first side S1 of the first metal pattern 1110 and a second side S2 opposite to the first side S1. The third and fourth parasitic patches PP3, PP4 may be spaced apart from and disposed in parallel to a third side S3 of the first metal pattern 1110 and a fourth side S4 opposite to the third side S3.

The fifth and sixth parasitic patches PP5, PP6 may be spaced apart from and disposed in parallel to a first side S1 of the second metal pattern 1120 and a second side S2 opposite to the first side S1. The seventh and eighth parasitic patches PP7, PP8 may be spaced apart from and disposed in parallel to a third side S3 of the second metal pattern 1120 and a fourth side S4 opposite to the third side S3.

The first and third parasitic patches PP1, PP3 may be disposed to have a first length L1a and a first width W1a. The fifth and seventh parasitic patches PP1, PP3 may be disposed to have a first length L1a and a first width W1a. The first and third parasitic patches PP1, PP3 adjacent to the first metal pattern 1110 may be disposed to correspond to the fifth and seventh parasitic patches PP5, PP7 adjacent to the second metal pattern 1120. The second and fourth parasitic patches PP2, PP4 may be disposed to have a second length L2a and a second width W2a. The sixth and eighth parasitic patches PP6, PP8 may be disposed to have a second length L2a and a second width W2a. The second and fourth parasitic patches PP2, PP4 adjacent to the first metal pattern 1110 may be disposed to correspond to the sixth and eighth parasitic patches PP6, PP8 adjacent to the second metal pattern 1120.

The second and fourth parasitic patches PP2, PP4 may be disposed to have the same second length L2a, and the first and third parasitic patches PP1, PP3 may be disposed to have the same first length L1a. The second and fourth parasitic patches PP2, PP4 adjacent to the first and second vertical vias V1, V2 may be disposed to have the second width W2a wider than the first width W1a of the first and third parasitic patches PP1, PP3. Therefore, a feed loss and unwanted radiation caused by the first and second vertical vias V1, V2 and the first and second feed portions F1, F2 may be reduced.

The second and fourth parasitic patches PP2, PP4 may be disposed to have the same second length L2a, and the first and third parasitic patches PP1, PP3 may be disposed to have the same first length L1a. The second and fourth parasitic patches PP2, PP4 adjacent to the first and second vertical vias V1, V2 may be disposed to have the second width W2a wider than the first width W1a of the first and third parasitic patches PP1, PP3. Therefore, a feed loss and unwanted radiation caused by the first and second vertical vias V1, V2 and the first and second feed portions F1, F2 may be reduced.

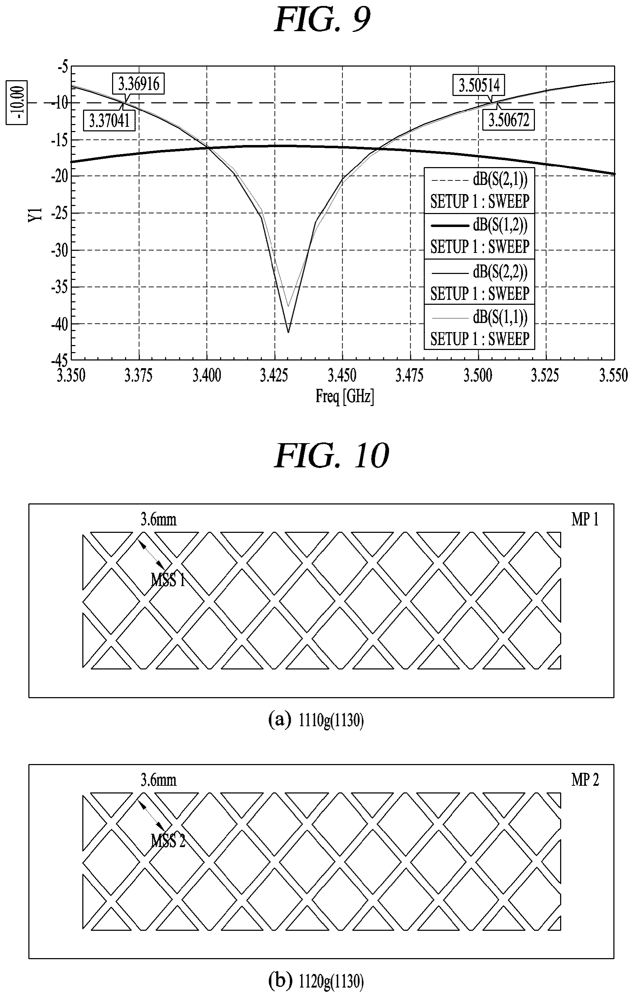

First and second metal patterns constituting a repeater device that transmits a wireless signal according to the present disclosure operates as first and second radiators in first and second regions. In this regard, FIG. 9 shows the reflection coefficient characteristics and transmission coefficient characteristics of first and second metal patterns constituting a repeater device that transmits a wireless signal according to the present disclosure.

Referring to FIGS. 7 to 9, a reflection coefficient S11 at the first feed pattern F1 connected to a first point of the first metal pattern 1110 through the first vertical via V1 has a value of 0 dB or less in a frequency band of 3.37 to 3.5 GHz. A reflection coefficient S22 at the second feed pattern F2 connected to a second point of the first metal pattern 1110 through the second vertical via V2 has a value of 0 dB or less in a frequency band of 3.37 to 3.5 GHz. An isolation S21, S12 between the first feed pattern F1 and the second feed pattern F2 has a value of 5 dBc or less in a frequency band of 3.37 to 3.5 GHz.

In addition, a reflection coefficient S11 at the first feed pattern F1 connected to a third point of the second metal pattern 1120 through the third vertical via V3 has a value of 0 dB or less in a frequency band of 3.37 to 3.5 GHz. A reflection coefficient S22 at the second feed pattern F2 connected to a fourth point of the second metal pattern 1120 through the fourth vertical via V4 has a value of 0 dB or less in a frequency band of 3.37 to 3.5 GHz. An isolation S21, S12 between the first feed pattern F1 and the second feed pattern F2 has a value of 5 dBc or less in a frequency band of 3.37 to 3.5 GHz.

Therefore, first and second metal patterns constituting a repeater device that transmits a wireless signal according to the present disclosure may operate as first and second radiators in first and second regions, thereby transmitting a wireless signal even when radio wave blocking/loss occurs between the first and second regions. In addition, the first and second metal patterns of the repeater device may maintain a reduced level of mutual interference while receiving polarized signals orthogonal to each other. Accordingly, even in a situation where the polarization of radio waves is changed in an arbitrary direction in an indoor region, an arbitrary polarized signal may be received to transmit a wireless signal to a shadow area.

A transmission line of a repeater device that transmits a wireless signal according to the present disclosure may be disposed in a strip-line structure in which first and second ground patterns are disposed in upper and lower regions in a Z-axis direction. In this regard, FIG. 10 shows first and second ground patterns in upper and lower regions of a transmission line disposed in a strip line structure on a flexible substrate.

Referring to FIG. 8 and (a) of FIG. 10, the first ground pattern 1110g of the flexible substrate 1300 is shown. Referring to FIG. 8 and (b) of FIG. 10, the second ground pattern 1120g of the flexible substrate 1300 is shown.

Referring to FIGS. 7, 8, and 10, since the transmission line 1300L of the repeater device is implemented on the flexible substrate 1300, the first and second ground patterns 1110g, 1120g may be configured with a metal mesh structure (MSS). The first ground pattern 1110g may include a first metal mesh structure MSS1 and a first metal pattern MP1 disposed to surround the first metal mesh structure MSS1. The second ground pattern 1120g may include a second metal mesh structure MS2S and a second metal pattern MP2 disposed to surround the second metal mesh structure MSS2.

The first and second ground patterns 1110g, 1120g of the flexible substrate 1300 may include metal mesh lines disposed in a first axis and a second axis direction perpendicular to the first axis. A dielectric region (DR) from which a metal pattern is removed may be disposed between adjacent metal mesh lines among the metal mesh lines. A distance between adjacent metal mesh lines in which the dielectric region (DR) is disposed may be disposed within a predetermined range on the basis of 3.6 mm.

As the first and second ground patterns 1110g, 1120g of the flexible substrate 1300 are configured with the first and second metal mesh structures MSS1, MSS2, a dielectric region from which the metal is removed increases, thereby increasing the flexibility of the flexible substrate 1300. Accordingly, the flexible substrate 1300 on which the transmission line 1300L is disposed is disposed in a region between a side surface and gap of a door structure of FIG. 2, thereby improving mechanical stability while maintaining electrical characteristics.

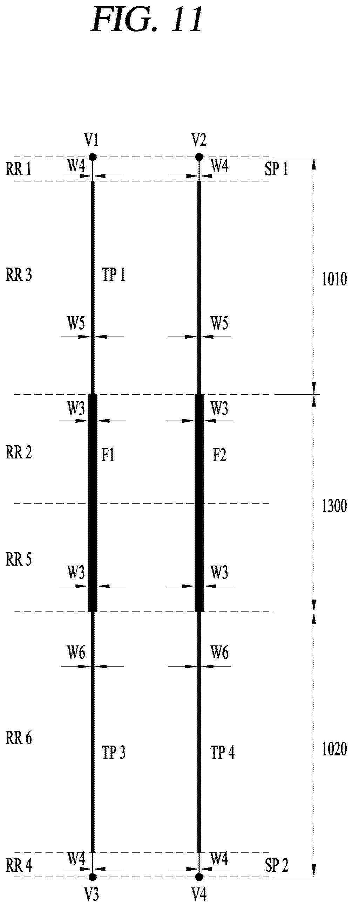

Meanwhile, a transmission line of a repeater device that transmits a wireless signal according to the present disclosure may be implemented with different widths for each region so as to optimize electrical and mechanical characteristics. In this regard, FIG. 11 shows a structure of a transmission line disposed on a first substrate, a flexible substrate, and a second substrate.

Referring to FIGS. 7, 8, and 11, a third width W3 of the first and second feed patterns F1, F2 of the flexible substrate 1300 may be disposed to have a characteristic impedance of less than 50 ohm within a predetermined range on the basis of 100 um. A fourth width W4 of the first and second feed patterns F1, F2 disposed on the first signal pattern layer SP1 of the first substrate 1010 may be less than a third width W3 of the first and second feed patterns F1, F2 of the flexible substrate 1300 and may be disposed to have an impedance of 50 ohm. A fourth width W4 of the first and second feed patterns F1, F2 of the flexible substrate 1300 disposed on the second signal pattern layer SP2 of the second substrate 1020 may be less than a third width W3 of the first feed pattern F1 of the flexible substrate 1300 and may be disposed to have an impedance of 50 ohm.

Meanwhile, first and second transformation patterns TP1, TP2 for impedance transformation may be disposed in a third region RR3 between a first region RR1 of the first signal pattern layer SP1 and a second region RR2 of the first and second feed patterns F1, F2. A fifth width W5 of the first and second transformation patterns TP1, TP2 may be disposed to have a value between the third width W3 and the fourth width W4. A length of the first and second transformation patterns TP1, TP2 may be disposed within a predetermined range on the basis of 1/4 of a wavelength of an operating frequency.

Third and fourth transformation patterns TP3, TP4 for impedance transformation may be disposed in a sixth region RR6 between a fourth region RR4 of the second signal pattern layer SP2 and a fifth region RR5 of the first and second feed patterns F1, F2. A sixth width W6 of the third and fourth transformation patterns TP3, TP4 may be disposed to have a value between the third width W3 and the fourth width W4. A length of the third and fourth transformation patterns TP3, TP4 may be disposed within a predetermined range on the basis of 1/4 of a wavelength of an operating frequency.

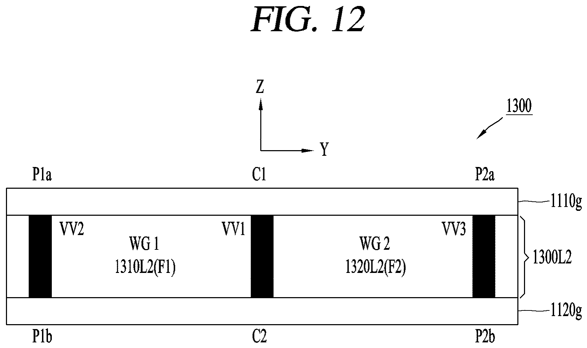

Meanwhile, a flexible substrate of a repeater device that transmits a wireless signal in the present disclosure may be configured with as a feed structure having a waveguide structure. In this regard, FIG. 12 shows a cross-sectional view of a flexible substrate of a repeater device configured with a feed structure having a waveguide structure.

Referring to FIGS. 5 to 8 and 12, the transmission line 1300 may be implemented as a vertical connecting portion 1300L2 disposed vertically with respect to the first metal pattern 1100 and the second metal pattern 1120. A first substrate 1010 on which the first metal pattern 1100 is disposed and a second substrate 1020 on which the second metal pattern 1120 is disposed may be connected to each other through a flexible substrate 1300. The transmission line 1300 may be configured with a waveguide structure through a space between the first and second ground patterns 1110g, 1120g and the vertical connecting portion 1300L2. Since the transmission line 1300 having a waveguide structure is implemented within a substrate, it may be referred to as a substrate-integrated waveguide (SIW).

The flexible substrate 1300 may be configured to include the first and second ground patterns 1110g, 1120g and the vertical connecting portion 1300L2. The first and second ground patterns 1110g, 1120g may be disposed on the front and rear surfaces of the flexible substrate 1300. The vertical connecting portion 1300L2 may be disposed vertically between the first and second ground patterns 1110g, 1120g with respect to the first and second ground patterns 1110g, 1120g.

A waveguide structure provided by the vertical connecting portion 1300L2 may be disposed at one side end portion and the other end portion of the flexible substrate 1300 inserted into the first and second substrates 1010, 1020 of FIG. 8. A strip line structure provided by the horizontal connecting portion 1300L1 of FIGS. 6 and 8 may be disposed at the center of the flexible substrate 1300.

The flexible substrate 1300 may be configured to include a plurality of vertical vias. A plurality of vertical vias of the flexible substrate 1300 may be configured with a plurality of vertical ground vias vertically connecting the first and second ground patterns 1110g, 1120g. The flexible substrate 1300 may be configured to include a first vertical via VV1, a second vertical via VV2, and a third vertical via VV3.

The first vertical via VV1 may be configured to vertically connect center points C1, C2 of the first and second ground patterns 1110g, 1120g. The second vertical via VV2 may be configured to vertically connect first points P1a, P1b on one sides of the first and second ground patterns 1110g, 1120g. The third vertical via VV3 may be configured to vertically connect second points P2a, P2b on the other sides of the first and second ground patterns 1110g, 1120g.

A first horizontal distance between the first vertical via VV1 and the second vertical via VV2 and a second horizontal distance between the first vertical via VV1 and the third vertical via VV3 may be set to be the same. A first polarized signal in one axis direction may be transmitted through a first waveguide region WG1 between the first vertical via VV1 and the second vertical via VV2. A second polarized signal in the other axis direction perpendicular to the one axis direction may be transmitted through a second waveguide region WG2 between the first vertical via VV1 and the third vertical via VV3.

Therefore, the first waveguide region WG1 between the first vertical via VV1 and the second vertical via VV2 and the second waveguide region WG2 between the first vertical via VV1 and the third vertical via VV3, which are disposed in the flexible substrate 1300 are disposed in a symmetrical structure. Accordingly, the first and second signal characteristics (reflection loss, insertion loss) inside the first waveguide region WG1 and the second waveguide region WG2 may be maintained at the same level or at a similar level within a predetermined range.

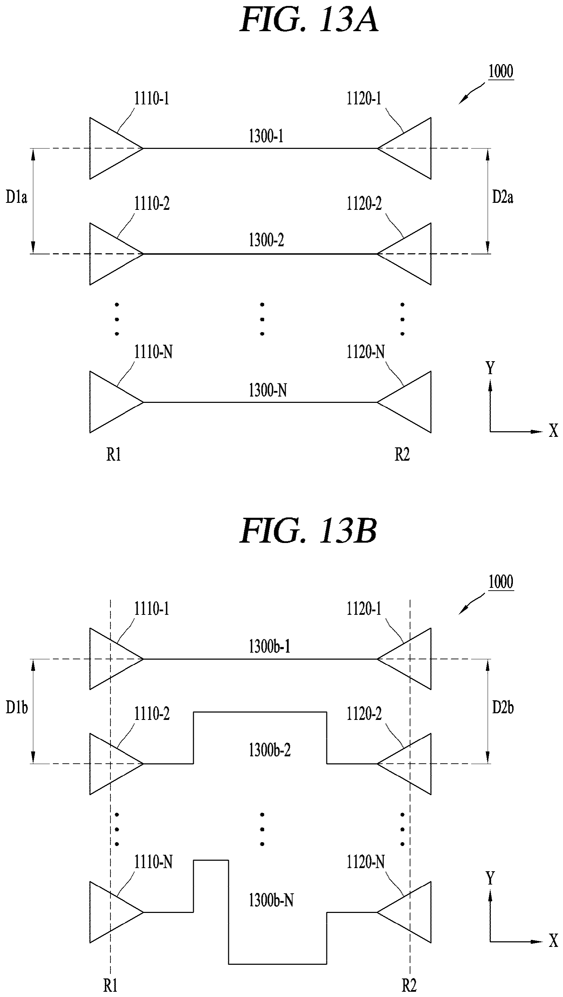

Meanwhile, a repeater device that transmits a wireless signal according to the present disclosure may be implemented in an array structure. In this regard, FIG. 13A shows a repeater device in which transmission lines are disposed to have the same length. FIG. 13B shows a repeater device in which transmission lines are disposed to have different lengths.

Referring to FIG. 13A, the repeater device 1000 may include first radiators 1110, 1110-2, ..., 1110-N in a first region R1, second radiators 1120-1, 1120-2, ..., 1120-N in a second region R2, and transmission lines 1300-1, 1300-2, ..., 1300-N. The transmission lines 1300-1, 1300-2, ..., 1300-N may be disposed to have the same length such that beam steering angles of the first radiators 1100-1, 1110-2, ..., 1110-N and the second radiators 1100-1, 1110-2, ..., 1110-N may be formed to be the same as 0 degrees.

A first distance D1a between adjacent first radiators 1100-1, 1110-2, ..., 1110-N may be set in a range of 0.5 to 1 wavelength. A second distance D2a between adjacent second radiators 1120-1, 1120-2, ..., 1120-N may be set in a range of 0.5 to 1 wavelength. Here, the wavelength corresponds to a wavelength in free space $\lambda 0$ corresponding to a maximum frequency within an operating frequency band. The first distance D1a and the second distance D2a may be disposed to have the same distance.

The first distance D1a and the second distance D2a may be set similarly to a distance between adjacent radiators in an array antenna. When the first distance D1a and the second distance D2a are set to less than 0.5 wavelength, performance degradation such as a decrease in array gain may occur due to an interference between adjacent radiators. When the first distance D1a and the second distance D2a are greater than one wavelength, a grating lobe may occur, which may reduce the array antenna efficiency. In addition, as a distance between array antennas increases, an area occupied by the repeater device increases, so it is necessary to efficiently utilize the performance of the repeater device in a minimum space.

Referring to FIG. 13B, the repeater device 1000 may include first radiators 1100-1, 1110-2, ..., 1110-N in a first region R1, second radiators 1100-1, 1110-2, ..., 1110-N in a second region R2, and transmission lines 1300b-1, 1300b-2, ..., 1300b-N. The transmission lines 1300b-1, 1300b-2, ..., 1300b-N are disposed to have different lengths such that beam steering angles of the first radiators 1100-1, 1110-2, ..., 1110-N and the second radiators 1100-1, 1110-2, ..., 1110-N may be formed to have different angles. A length difference between adjacent transmission lines 1300b-1, 1300b-2, ..., 1300b-N may be formed to increase or decrease at a predetermined ratio.

When a direction in which radio waves are received and a direction in which radio waves are re-radiated by the repeater device 1000 are set, the beam steering angle may be controlled by adjusting a length between adjacent transmission lines 1300b-1, 1300b-2, ..., 1300b-N of the repeater device 1000. Therefore, a length between the transmission lines 1300b-1, 1300b-2, ..., 1300b-N performs the same role as a phase shifter, thereby allowing beam direction control. A maximum phase difference between transmission lines 1300b-1, 1300b-2, ..., 1300b-N used in an array structure of the repeater device 1000 may be set to 360 degrees (1 wavelength). Due to the 360-degree periodicity, the beam steering angle does not increase any further even when the maximum phase difference between adjacent transmission lines 1300b-1, 1300b-2, ..., 1300b-N increases beyond 360 degrees. In addition, as lengths of the transmission lines 1300b-1, 1300b-2, ..., 1300b-N increase, an insertion loss difference between adjacent transmission lines 1300b-1, 1300b-2, ..., 1300b-N increases.

The transmission lines 1300-1, 1300-2, ..., 1300-N of FIG. 13A and the transmission lines 1300b-1, 1300b-2, ..., 1300b-N of FIG. 13B may be implemented as RF transmission lines of various shielding structures such as a coaxial cable, a strip lines, an SIW, and a waveguide. Meanwhile, a virtual line connecting the first radiators 1100-1, 1110-2, ..., 1110-N in a first region R1 and the second radiators 1100-1, 1110-2, ..., 1110-N in a second region R2 may be set in parallel to an axis (Y-axis) of the array structure.

Meanwhile, a first distance D1b between adjacent first radiators 1100-1, 1110-2, ..., 1110-N may be set in a range of 0.5 to 1 wavelength. A second distance D2b between adjacent second radiators 1120-1, 1120-2, ..., 1120-N may be set in a range of 0.5 to 1 wavelength. Here, the wavelength corresponds to a wavelength in free space $\lambda 0$ corresponding to a maximum frequency within an operating frequency band. The first distance D1b and the second distance D2b may be disposed to have the same distance.

The first distance D1b and the second distance D2b may be set similarly to a distance between adjacent radiators in an array antenna. When the first distance D1b and the second distance D2b are set to less than 0.5 wavelength, performance degradation such as a decrease in array gain may occur due to an interference between adjacent radiators. When the first distance D1b and the second distance D2b are greater than one wavelength, a grating lobe may occur, which may reduce the array antenna efficiency. In particular, the structure of FIG. 13B has a beam steering angle that is oriented at an angle different from 0 degrees in a vertical direction compared to the structure of FIG. 13A, and as the beam steering angle increases, a level of the grating lobe or side lobe may increase. In addition, as a distance between array antennas increases, an area occupied by the repeater device increases, so it is necessary to efficiently utilize the performance of the repeater device in a minimum space.

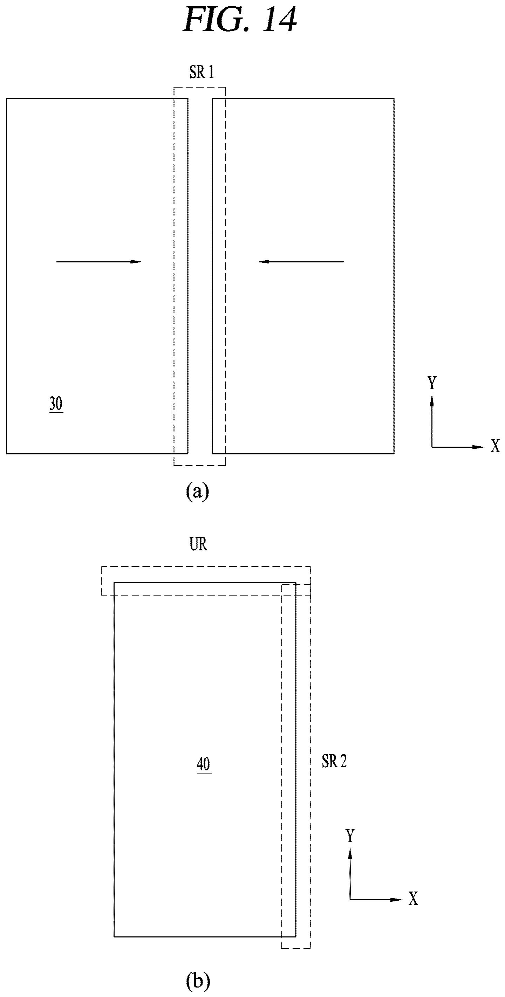

Meanwhile, a repeater device that transmits a wireless signal according to the present disclosure may be disposed on an inner side surface of an elevator door or a fire door as shown in FIG. 2. In this regard, FIG. 14 shows structures in which a repeater device can be disposed on an inner side of an elevator door or a fire door.

Referring to (c) of FIG. 2 and (a) of FIG. 14, the repeater device 1000 may be disposed in a side region SR1 inside the elevator door 30. Referring to (d) of FIG. 2 and (b) of FIG. 14, the repeater device 1000 may be disposed in an upper region (UR) and a side region SR2 of the fire door 40.

Referring to FIG. 2 and FIG. 14, an antenna of a repeater device may be implemented with a dual polarization structure. In this regard, in an indoor environment within a building, a lot of scattering of radio waves may occur to rotate a direction of polarization by reflection. Meanwhile, in a non-line-of-sight (non-LOS) environment, there is a very high probability of a polarization mismatch occurring between a base station and a passive repeater.

When there is an obstacle between the base station and the passive repeater, an antenna on an outdoor side must also apply a dual polarization to increase a reception probability because it is not known which polarization will arrive. A placeable region of the elevator door 30 made of a metallic material may be disposed as a side region SR1 inside the door 30. A placeable region of the fire door 40 made of a metallic material may include an upper region UR and a side region SR2 in the shape of a "⌐". When the repeater device supports a single polarization, the polarization of the transmitted signal must be adjusted to match the polarization of the received signal.

However, when a repeater device is disposed on the elevator door 30 or the fire door 40, it is not easy to change the polarization of the radiator. Therefore, the repeater device needs to be designed to support a dual polarization.

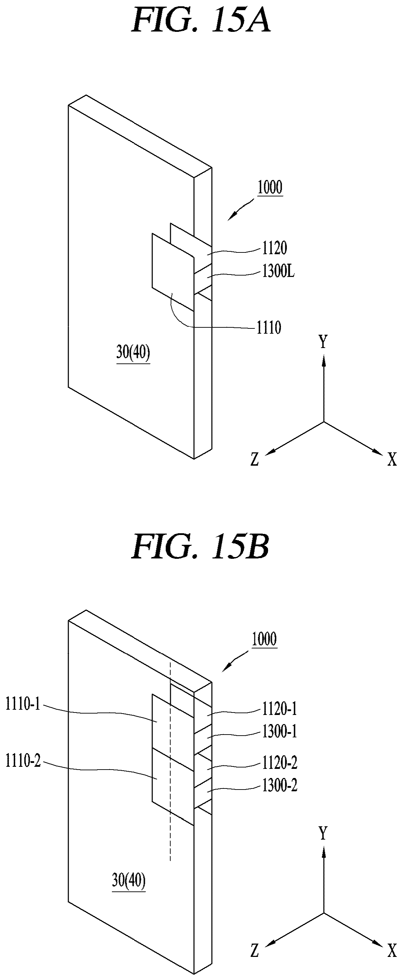

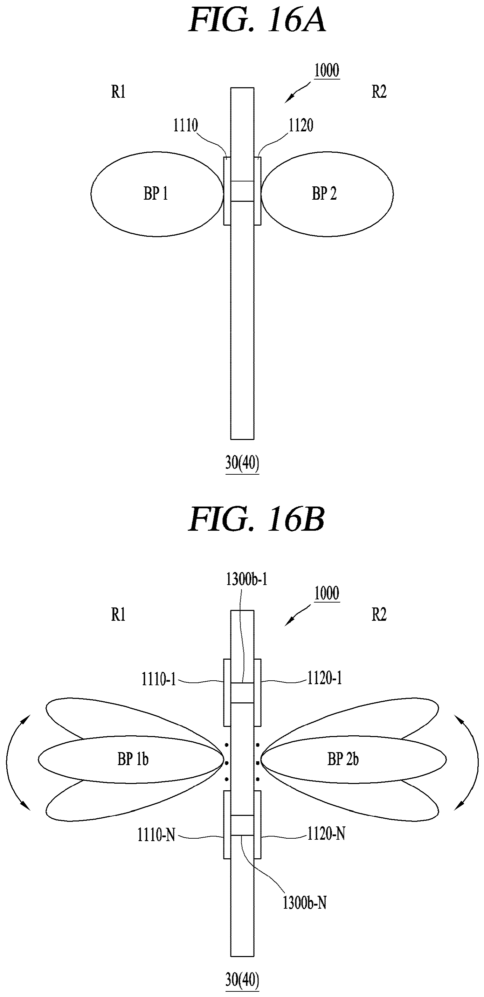

In this regard, FIGS. 15A and 15B show radiator structures of a repeater device disposed on one side of the inside and the outside of a door. FIG. 15A shows a door placement structure of a repeater device having a single radiator. FIG. 15B shows a door placement structure of a repeater device having an array structure of multiple radiators. Meanwhile, FIG. 16A shows beam patterns by the radiator of the repeater device of FIG.

15A. FIG. 16B shows beam patterns by the radiators of the repeater device of FIGS. 13B and 15B.

Referring to FIG. 2, FIG. 14 and FIG. 15A, the repeater device 1000 may be disposed in the elevator door 30 or the fire door 40. The first metal pattern 1110 may be disposed on one surface of the door 30 or the fire door 40, and the second metal pattern 1120 may be disposed on the other surface of the door 30 or the fire door 40. A flexible substrate having the transmission line 1300L disposed thereon may be disposed on an inner side surface of the door 30 or the fire door 40.

Referring to FIG. 2, FIG. 14 and FIG. 15B, the repeater device 1000 may be disposed in the elevator door 30 or the fire door 40. First radiators 1110-1, 1110-2 may be disposed on one surface of the door 30 or the fire door 40, and second radiators 1120-1, 1120-2 may be disposed on the other surface of the door 30 or the fire door 40. A flexible substrate having transmission lines 1300-1, 1300-2 disposed thereon may be disposed on an inner side surface of the door 30 or the fire door 40.

Referring to FIGS. 2, 4 to 8, and 13A to 15B, the first metal pattern 1110 may be configured with first radiators 1110-1, 1110-2, ..., 1110-N disposed to be spaced apart by a first distance on the other axis perpendicular to one axis of a first surface of the structure 30, 40. The second metal pattern 1120 may be configured with second radiators 1120-1, 1120-2, ..., 1120-N disposed to be spaced apart by a second distance equal to the first distance on the other axis perpendicular to one axis of a second surface of the structure 30, 40. The transmission line 1300L may include a plurality of transmission lines 1300-1, 1300-2, ..., 1300-N configured to connect the respective first radiators 1110-1, 1110-2, ..., 1110-N and the respective second radiators 1120-1, 1120-2, ..., 1120-N.

The respective first radiators 1110-1, 1110-2, ..., 1110-N, the respective second radiators 1120-1, 1120-2, ..., 1120-N, and the respective transmission lines 1300-1, 1300-2, ..., 1300-N may constitute respective sub modules. The respective sub modules may be expanded and disposed in plurality to be spaced apart from by a first distance on the other axis of the structure 30, 40.

Referring to FIGS. 15A and 16A, a first beam pattern BP1 may be formed in a first region R1 of the door 30 or the fire door 40 on which the first metal pattern 1110 is disposed. A second beam pattern BP2 may be formed in a second region R2 of the door 30 or the fire door 40 on which the second metal pattern 1120 is disposed.

Referring to FIG. 13B, FIG. 15B and FIG. 16B, a third beam pattern BP3 may be formed in the first region R1 of the door 30 or the fire door 40 on which the first radiators 1110-1, ..., 1110-N are disposed. A fourth beam pattern BP4 may be formed in the second region R2 of the door 30 or the fire door 40 on which the second radiators 1120-1, ..., 1120-N are disposed.

A beam width of a first beam pattern BP1b of the first radiators 1110-1, ..., 1110-N may be formed to be narrower than that of the first beam pattern BP1 of a single radiator. A beam width of a second beam pattern BP2b of the first radiators 1120-2, ..., 1120-N may be formed to be narrower than that of the second beam pattern BP2 of a single radiator. A beam direction of the third beam pattern BP3 may be changed in upper and lower directions in a Y-axis direction by varying lengths of transmission lines or by using a phase shifter. A beam direction of the fourth beam pattern BP4 may be changed in upper and lower directions in a Y-axis direction by varying lengths of transmission lines or by using a phase shifter.

Referring to FIG. 5, FIG. 13B, FIG. 15B, and FIG. 16B, the first metal pattern 1120 may be configured with first radiators 1110-1, ..., 1110-N spaced apart in the other axis (Y-axis) direction perpendicular to the one axis direction. The second metal pattern 1120 may be configured with second radiators 1120-1, ..., 1120-N spaced apart in the other axis (Y-axis) direction. A transmission line may include a plurality of transmission lines 1300b-1, ..., 1300b-N configured to connect the second radiators 1120-1, ..., 1120-N and the first radiators 1110-1, ..., 1110-N, respectively.

A door 30 or a fire door 40 is configured with a structure 30, 40 in which a repeater device is disposed. The structure 30, 40 may constitute a door 30 or a fire door 40 made of a metallic material. The first radiators 1110-1, ..., 1110-N may be disposed on a front surface of the door 30 or the fire door 40. The second radiators 1120-1, ..., 1120-N may be disposed on a rear surface of the door 30 or the fire door 40. The regions where the first radiators 1110-1, ..., 1110-N are disposed may correspond to the regions where the second radiators 1120-1, ..., 1120-N are disposed, respectively. The positions on the first surface of the structure 30, 40 where the first radiators 1110-1, ..., 1110-N are disposed may correspond to those on the second surface of the structure 30, 40 where the second radiators 1120-1, ..., 1120-N are disposed. Accordingly, even when any one region of front or rear surfaces of the door 30 or the fire door 40 corresponds to a shadow area, a wireless signal may be stably transmitted through the radiators disposed in the same region.

The first beam pattern BP1 formed through the first radiators 1110-1, ..., 1110-N may be formed to have a narrower beam width in the other axis (Y-axis) direction than in the one axis (X-axis) direction. The second beam pattern BP2b formed through the first radiators 1120-2, ..., 1120-N may be formed to have a narrower beam width in the other axis (Y-axis) direction than in the one axis (X-axis) direction. A first distance between the first radiators 1110-1, ..., 1110-N adjacent to each other on the other axis (Y-axis) may be a value between 0.5 and 1 wavelength on the basis of a wavelength corresponding to a maximum frequency within an operating frequency band. A second distance between the second radiators 1120-1, ..., 1120-N adjacent to each other on the other axis (Y-axis) may be a value between 0.5 and 1 wavelength on the basis of a wavelength corresponding to a maximum frequency within an operating frequency band.

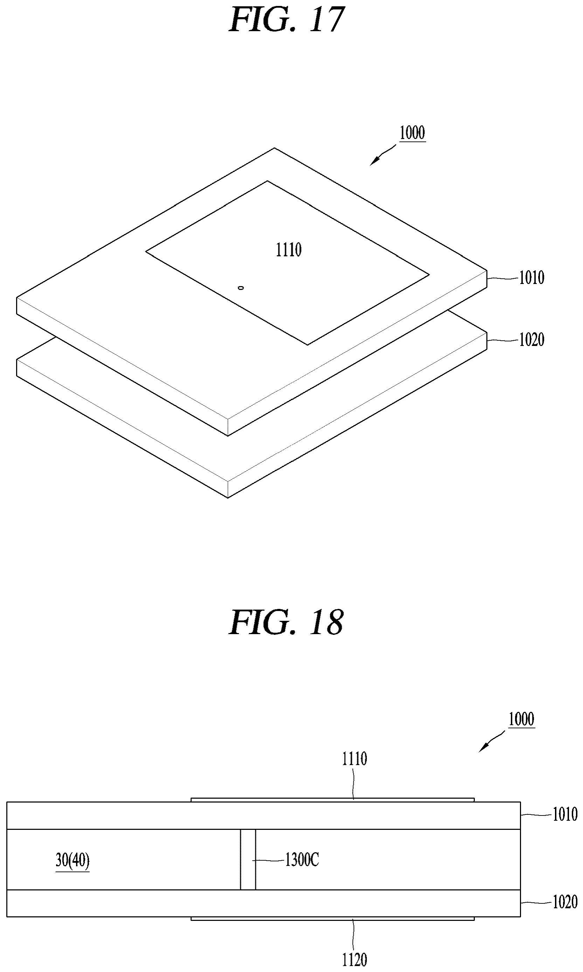

Meanwhile, in a repeater device that transmits a wireless signal according to the present disclosure, a transmission line may be implemented as a coaxial cable 1300C. In this regard, FIGS. 17 and 18 shows a repeater device including first and second metal patterns on first and second substrates connected by a coaxial cable.

FIG. 17 shows a perspective view of a repeater device including first and second metal patterns on first and second substrates connected by a coaxial cable. FIG. 18 shows a side view of a repeater device including first and second metal patterns on first and second substrates connected by a coaxial cable.

Referring to FIGS. 17 and 18, the repeater device 1000 may include a first substrate 1010 having a first metal pattern 1120 disposed thereon, a second substrate 1020 having a second metal pattern 1120 disposed thereon, and a coaxial cable 1300C connecting the first and second metal patterns 1110, 1120. The coaxial cable 1300C may form a vertical connecting portion vertically connecting the first metal pattern 1110 and the second metal pattern 1120.

A first substrate 1010 on which the first metal pattern 1120 is disposed may be disposed on one surface of the door 30 or the fire door 40. A second substrate 1020 on which the second metal pattern 1120 is disposed may be disposed on the other surface of the door 30 or the fire door 40.

In the above, a repeater device that transmits a wireless signal according to the present disclosure has been described. Hereinafter, the technical effects of a repeater device that transmits a wireless signal according to the present disclosure will be described.

According to an embodiment of the present disclosure, an antenna supporting a dual polarization in a repeater device may be utilized, thereby preventing signal transmission characteristics from being deteriorated due to a polarization mismatch in an indoor environment.

According to an embodiment of the present disclosure, an array antenna having radiators in an array structure in a repeater device, thereby increasing a probability of receiving a signal in a shadow region.

According to an embodiment of the present disclosure, a modular structure may allow easy adjustment of a number of elements, and respond to various radio environments through adjusting the gain of the repeater device according to the adjustment of the number of elements.

Further scope of applicability of the present disclosure will become apparent from the following detailed description. It should be understood, however, that the detailed description and specific examples, such as the preferred embodiments of the present disclosure, are given by way of illustration only, since various modifications and alternations within the concept and scope of the disclosure will be apparent to those skilled in the art. The detailed description should not be limitedly construed in all of the aspects, and should be understood to be illustrative. Therefore, all changes and modifications that fall within the metes and bounds of the claims, or equivalents of such metes and bounds are therefore intended to be embraced by the appended claims.

**Claims**

1. A repeater device comprising,

   a first substrate on one surface of which a first metal pattern configured to receive a signal is disposed;
   a second substrate on one surface of which a second metal pattern is disposed to correspond to the first metal pattern; and
   a flexible substrate having one end portion connected to the first substrate, the other end portion connected to the second substrate, and a transmission line on one surface thereof,
   wherein the first substrate, the second substrate, and the flexible substrate are disposed as an integrated module configured integrally to surround a first surface, a second surface, and a side surface between the first surface and the second surface of a structure to which the repeater device is attached.

2. The repeater device of claim 1, wherein the first metal pattern is configured with first radiators disposed to be spaced apart by a first distance on the other axis perpendicular to one axis of the first surface,

   wherein the second metal pattern is configured with second radiators disposed to be spaced apart by a second distance equal to the first distance on the other axis perpendicular to one axis of the second surface,
   wherein the transmission line includes a plurality of transmission lines configured to connect the respective first radiators and the respective second radiators,
   wherein the respective first radiators, the respective second radiators, and the respective transmission lines constitute respective sub modules, and
   wherein the respective sub modules are expanded and disposed in plurality to be spaced apart by the first distance on the other axis of the structure.

3. The repeater device of claim 2, wherein the first distance between the first radiators and the second distance between the second radiators, which are adjacent on the other axis, are values between 0.5 and 1 wavelength on the basis of a wavelength corresponding to a maximum frequency within an operating frequency band,

   wherein a first beam pattern formed through the first radiators has a narrower beam width in the other axis direction than in one axis direction, and
   wherein a second beam pattern formed through the second radiators has a narrower beam width in the other axis direction than in the one axis direction.

4. The repeater device of claim 2, wherein the structure constitutes a door made of a metallic material,

   wherein the first radiators are disposed on a front surface of the door, and the second radiators are disposed on a rear surface of the door, and
   wherein positions on the first surface where the first radiators are disposed correspond to those on the second surface where the second radiators are disposed.

5. The repeater device of claim 1, wherein the transmission line of the flexible substrate is disposed to extend to an inner region of the first substrate where the first metal pattern is disposed, and is disposed to extend to an inner region of the second substrate where the second metal pattern is disposed.

6. The repeater device of claim 1, wherein the signal received in a first region through the first metal pattern is transmitted to a second region different from the first region through the transmission line and the second metal pattern,

   wherein a second signal received in the second region through the second metal pattern is transmitted to the first region through the transmission line and the first metal pattern, and
   wherein the first region is a region in a front direction where the first metal pattern is disposed, and the second region is a region in a front direction where the second metal pattern is disposed.

7. The repeater device of claim 1, wherein the transmission line is implemented as a horizontal connecting portion that horizontally connects the first metal pattern and the second metal pattern, and
   wherein the flexible substrate comprises:

   first and second ground patterns disposed on front and rear surfaces thereof; and
   the horizontal connecting portion disposed in parallel to the first and second ground patterns between the first and second ground patterns.

8. The repeater device of claim 7, wherein the horizontal connecting portion comprises:

a first feed pattern configured to transmit a first polarized signal in one axis direction; and
a second feed pattern spaced apart from and disposed in parallel to the first feed pattern so as to transmit a second polarized signal in the other axis direction perpendicular to the one axis direction.

9. The repeater device of claim 8, wherein the first substrate comprises a first vertical connection via vertically connecting a first point of the first metal pattern and the first feed pattern, and a second vertical connection via vertically connecting a second point of the first metal pattern and the second feed pattern, and

wherein the second substrate comprises a third vertical connection via vertically connecting a third point of the second metal pattern and the first feed pattern, and a fourth vertical connection via vertically connecting a fourth point of the second metal pattern and the second feed pattern.

10. The repeater device of claim 8, wherein the first substrate comprises:

a first ground layer disposed on a rear surface of the first substrate;
a first signal pattern layer disposed in an upper region in a Z-axis direction of the first ground layer;
a second ground layer disposed in an upper region in a Z-axis direction of the first signal pattern layer; and
a first antenna layer on which the first metal pattern is disposed in an upper region in a Z-axis direction of the second ground layer, and
wherein a first dielectric layer is disposed between the first ground layer and the first signal pattern layer, a second dielectric layer is disposed between the first signal pattern layer and the second ground layer, and a third dielectric layer is disposed between the second ground layer and the first antenna layer.

11. The repeater device of claim 10, wherein the second substrate comprises:

a third ground layer disposed on a rear surface of the second substrate;
a second signal pattern layer disposed in an upper region in a Z-axis direction of the third ground layer;
a fourth ground layer disposed in an upper region in a Z-axis direction of the second signal pattern layer; and
a second antenna layer on which the second metal pattern disposed is disposed in an upper region in a Z-axis direction of the fourth ground layer, and
wherein a fourth dielectric layer is disposed between the third ground layer and the second signal pattern layer, a fifth dielectric layer is disposed between the second signal pattern layer and the fourth ground layer, and a sixth dielectric layer is disposed between the fourth ground layer and the second antenna layer.

12. The repeater device of claim 11, wherein the first substrate further comprises a first ground via vertically connecting the first ground layer and the second ground layer, and the first and second vertical connection vias connecting the first metal pattern and the first signal pattern layer,

wherein the second substrate further comprises a second ground via vertically connecting the third ground layer and the fourth ground layer, and the third and fourth vertical connection vias connecting the second metal pattern and the second signal pattern layer,
wherein the first and second feed patterns of the flexible substrate are disposed to extend to the first signal pattern layer of the first substrate, and
wherein the first and second feed patterns of the flexible substrate are disposed to extend to the second signal pattern layer of the second substrate.

13. The repeater device of claim 11, wherein the first metal pattern and the second metal pattern are disposed in a direction rotated by a first angle with respect to an X-axis,

wherein the first metal pattern and the second metal pattern are disposed with square patches having first to fourth sides, and
wherein the first and second feed patterns are disposed in parallel to a Y-axis.

14. The repeater device of claim 13, wherein the first substrate further comprises first and second parasitic patches disposed in parallel to a first side of the first metal pattern and a second side opposite to the first side, and third and fourth parasitic patches disposed in parallel to a third side and a fourth side opposite to the third side,

wherein the second substrate further comprises fifth and sixth parasitic patches disposed in parallel to a first side of the second metal pattern and a second side opposite to the first side, and seventh and eighth parasitic patches disposed in parallel to a third side and a fourth side opposite to the third side,

wherein the first and third parasitic patches are disposed to have a first length and a first width, and the second and fourth parasitic patches are disposed to have a second length and a second width, and

wherein the fifth and seventh parasitic patches are disposed to have the first length and the first width, and the sixth and eighth parasitic patches are disposed to have the second length and the second width.

15. The repeater device of claim 8, wherein the first and second ground patterns of the flexible substrate comprises metal mesh lines disposed in a first axis and a second axis direction perpendicular to the first axis,

wherein a dielectric region from which a metal pattern is removed is disposed between adjacent metal mesh lines among the metal mesh lines, and

wherein a distance between the adjacent metal mesh lines is disposed to have a predetermined range on the basis of 3.6 mm.

16. The repeater device of claim 15, wherein a third width of the first and second feed patterns of the flexible substrate is disposed to have a characteristic impedance of less than 50 ohm within a predetermined range on the basis of 100 um, and

wherein a fourth width of the first and second feed patterns disposed on the first and second signal pattern layers of the first and second substrates is less than the third width and is disposed to have an impedance of 50 ohm.

17. The repeater device of claim 8, wherein the flexible substrate further comprises:

a first vertical via configured to vertically connect the first and second ground patterns between a first horizontal connecting portion and a second horizontal connecting portion;

a second vertical via configured to be spaced apart from an end portion of the first horizontal connecting portion to vertically connect the first and second ground patterns; and

a third vertical via configured to be spaced apart from an end portion of the second horizontal connecting portion to vertically connect the first and second ground patterns, and

wherein a first horizontal distance between the first vertical via and the second vertical via and a second horizontal distance between the first vertical via and the third vertical via are set to be the same.

18. The repeater device of claim 7, wherein the transmission line is implemented as a vertical connecting portion disposed vertically with respect to the first metal pattern and the second metal pattern,

wherein the first substrate and the second substrate are connected through a flexible substrate, and

wherein the flexible substrate comprises:

first and second ground patterns disposed on front and rear surfaces thereof; and

a vertical connecting portion disposed vertically with respect to the first and second ground patterns between the first and second ground patterns.

19. The repeater device of claim 18, wherein the vertical connecting portion comprises:

a first vertical via configured to vertically connect center points of the first and second ground patterns;

a second vertical via configured to vertically connect first points on one sides of the first and second ground patterns; and

a third vertical via configured to vertically connect second points on the other sides of the first and second ground patterns, and

wherein a first horizontal distance between the first vertical via and the second vertical via and a second horizontal distance between the first vertical via and the third vertical via are set to be the same.

20. The repeater device of claim 17, wherein a first polarized signal in one axis direction is transmitted through a first waveguide region between the first vertical via and the second vertical via, and

wherein a second polarized signal in the other axis direction perpendicular to the one axis direction is transmitted through a second waveguide region between the first vertical via and the third vertical via.

# FIG. 1

1000

1000a       1000b

1300L

(a)

1000

200

R1    1000a       1000b    R2

100

1300L

(b)

# FIG. 2

(a)

(b)

(c)

(d)

# FIG. 3

TRANSMITTED SIGNAL

RERADIATED SIGNAL

TRANSMITTER

RIS WITH
N ELEMENTS

RECEIVER

# FIG. 4

(a)

100

A dBm

(b)

100

LOSS : B dB

A - B

(c)

D

100

D1

1110(ANT 1)

1120(ANT 2)

R1

R2

D2

A+G1+G2- α - FSPL

# FIG. 5

# FIG. 6

# FIG. 7

**FIG. 8**

# FIG. 9

# FIG. 10

(a) 1110g(1130)

(b) 1120g(1130)

# FIG. 11

## FIG. 12

Z

Y

1300

P1a       C1       P2a

1110g

VV2    VV1    VV3

WG 1       WG 2
1310L2(F1)       1320L2(F2)

1300L2

1120g

P1b       C2       P2b

## FIG. 13A

## FIG. 13B

# FIG. 14

SR 1

30

Y

X

(a)

UR

40

SR 2

Y

X

(b)

# FIG. 15A

1000

1120

1300L

1110

30(40)

Y

Z    X

# FIG. 15B

1000

1110-1

1110-2

1120-1

1300-1

1120-2

1300-2

30(40)

Y

Z    X

## FIG. 16A

R1

1000

R2

1110

1120

BP 1

BP 2

30(40)

## FIG. 16B

1300b-1

1000

R1

R2

1110-1

1120-1

BP 1b

BP 2b

1110-N

1120-N

1300b-N

30(40)

# FIG. 17

1000

1110

1010

1020

# FIG. 18

1000

1110

1010

30(40)

1300C

1020

1120

## INTERNATIONAL SEARCH REPORT

| International application No. |
|---|
| **PCT/KR2024/007233** |

| | |
|---|---|
| **A. CLASSIFICATION OF SUBJECT MATTER** | |
| **H04B 7/04**(2006.01)i; **H04B 7/06**(2006.01)i; **H04B 7/155**(2006.01)i; **H01Q 1/38**(2006.01)i; **H01Q 15/00**(2006.01)i; **H01Q 21/24**(2006.01)i | |
| According to International Patent Classification (IPC) or to both national classification and IPC | |

| **B. FIELDS SEARCHED** |
|---|
| Minimum documentation searched (classification system followed by classification symbols) |
| H04B 7/04(2006.01); G06K 7/00(2006.01); G06K 7/10(2006.01); H01Q 1/24(2006.01); H01Q 15/00(2006.01); H01Q 21/06(2006.01); H01Q 9/04(2006.01); H01Q 9/28(2006.01); H04B 7/145(2006.01); H05K 1/03(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 패턴 (pattern), 유연 (flexible), 주파수 (frequency), 전송 선 (transmission line), 중계 장치 (repeater) |

**C. DOCUMENTS CONSIDERED TO BE RELEVANT**

| Category* | Citation of document, with indication, where appropriate, of the relevant passages | Relevant to claim No. |
|---|---|---|
| X<br>A | US 2021-0250079 A1 (MURATA MANUFACTURING CO., LTD.) 12 August 2021 (2021-08-12)<br>See paragraphs [0040]-[0109] and figures 16A-16B. | 1-6<br>7-20 |
| A | KR 10-2023-0134676 A (AT & S. CORP.) 22 September 2023 (2023-09-22)<br>See paragraphs [0041]-[0103]. | 1-20 |
| A | US 2022-0300721 A1 (LES SYSTEMES FONEX DATA INC.) 22 September 2022 (2022-09-22)<br>See claims 1, 3 and 9. | 1-20 |
| A | US 2020-0136238 A1 (FUJIKURA LTD.) 30 April 2020 (2020-04-30)<br>See paragraphs [0019]-[0071]. | 1-20 |
| A | US 2019-0044606 A1 (STEALTHCASE OY) 07 February 2019 (2019-02-07)<br>See claims 22-34. | 1-20 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 February 2025** | **25 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 683 112 A1

## INTERNATIONAL SEARCH REPORT
### Information on patent family members

International application No.

**PCT/KR2024/007233**

| Patent document cited in search report | | | Publication date (day/month/year) | Patent family member(s) | | | Publication date (day/month/year) |
|---|---|---|---|---|---|---|---|
| US | 2021-0250079 | A1 | 12 August 2021 | CN | 112997422 | A | 18 June 2021 |
| | | | | CN | 112997422 | B | 04 April 2023 |
| | | | | JP | 7196930 | B2 | 27 December 2022 |
| | | | | US | 11664882 | B2 | 30 May 2023 |
| | | | | WO | 2020-090682 | A1 | 07 May 2020 |
| KR | 10-2023-0134676 | A | 22 September 2023 | KR | 10-2586473 | B1 | 10 October 2023 |
| US | 2022-0300721 | A1 | 22 September 2022 | CA | 3147212 | A1 | 04 March 2021 |
| | | | | WO | 2021-035330 | A1 | 04 March 2021 |
| US | 2020-0136238 | A1 | 30 April 2020 | CA | 3061698 | A1 | 28 October 2019 |
| | | | | EP | 3624354 | A1 | 18 March 2020 |
| | | | | JP | 2018-191215 | A | 29 November 2018 |
| | | | | JP | 6868462 | B2 | 12 May 2021 |
| | | | | WO | 2018-207500 | A1 | 15 November 2018 |
| US | 2019-0044606 | A1 | 07 February 2019 | AU | 2016-389600 | A1 | 03 August 2017 |
| | | | | AU | 2016-389600 | B2 | 29 October 2020 |
| | | | | CA | 3012426 | A1 | 03 August 2017 |
| | | | | CN | 108475853 | A | 31 August 2018 |
| | | | | CN | 108475853 | B | 08 June 2021 |
| | | | | EP | 3408893 | A1 | 05 December 2018 |
| | | | | EP | 3408893 | B1 | 16 March 2022 |
| | | | | FI | 126944 | B | 15 August 2017 |
| | | | | FI | 20165050 | A | 28 July 2017 |
| | | | | JP | 2019-503636 | A | 07 February 2019 |
| | | | | RU | 2018127880 | A | 27 February 2020 |
| | | | | RU | 2018127880 | A3 | 10 March 2020 |
| | | | | RU | 2728840 | C2 | 31 July 2020 |
| | | | | US | 11012140 | B2 | 18 May 2021 |
| | | | | WO | 2017-129855 | A1 | 03 August 2017 |

Form PCT/ISA/210 (patent family annex) (July 2022)